# DEMANDE DE BREVET EUROPEEN

(11) **EP 4 756 961 A1**
(43) Date de publication de la demande: **10.06.2026**
(21) Numéro de dépôt: 25220338.5
(22) Date de dépôt: 03.12.2025
(51) Int. Cl.: H01M 10/052, H01M 10/44, H01M 50/70, H02J 7/00

(54) **PROCÉDÉ DE GESTION D ÉNERGIE ET MODULE DE STOCKAGE D ÉNERGIE**

(30) Priorité: 03.12.2024 FR 2413379
(71) Demandeur: Commissariat à l'Energie Atomique et aux Energies Alternatives, 75015 Paris (FR)
(72) Inventeur: PANARIELLO, Remy, 38054 Grenoble cedex 09 (FR); REYNIER, Yvan, 38054 Grenoble cedex 09 (FR)
(74) Mandataire: Hautier IP

(57) **Abrégé**

Module de stockage d'énergie (1), comprenant au moins un accumulateur électrochimique (2) configuré pour stocker de l'énergie sous forme chimique, un dispositif de compression (3) configuré pour appliquer une pression sur ledit au moins un accumulateur électrochimique (2), le dispositif de compression (3) comprenant un système (4) configuré pour faire varier la pression selon une fréquence strictement supérieure à 0.01 Hz et inférieure ou égale à 4 Hz.

## Description

### DOMAINE TECHNIQUE

La présente invention concerne le domaine de la gestion du stockage d'énergie électrique, et plus particulièrement les accumulateurs électrochimiques à électrolyte liquide.

### ÉTAT DE LA TECHNIQUE

Actuellement on utilise des accumulateurs électrochimiques pour stocker de l'énergie sous forme chimique et pour restituer une partie de l'énergie stockée pour le fonctionnement d'appareils électriques. Les accumulateurs électrochimiques sont également appelés « cellules », et plus généralement cellules de stockage d'énergie chimique. Les accumulateurs peuvent être à base de lithium-ion, ou d'autres chimies lithium, comme le lithium métal, ou basés sur l'intercalation d'autres ions, comme les chimies sodium-ion ou potassium-ion au sein d'un système batterie. En outre, les accumulateurs comportent deux électrodes et un séparateur placé entre les deux électrodes. Le séparateur a pour fonction d'assurer une isolation électrique entre les électrodes et en outre la conduction ionique entre celles-ci pour assurer le déplacement des charges entre les électrodes. Plus particulièrement, un système électrochimique placé entre les deux électrodes peut comprendre un électrolyte liquide pour assurer la fonction de conduction ionique. En outre, un accumulateur comprend une enveloppe appelée également boîtier ou « casing » en langue anglaise pouvant être rigide (pour des accumulateurs du type parallélépipédique) ou souple, par exemple sous la forme d'un sachet. Cette enveloppe est également en charge d'assurer la connexion étanche entre les électrodes et un circuit électrique externe à l'accumulateur. Des organes de conduction électrique sont également intégrés aux accumulateurs de manière à assurer la connexion électrique entre les électrodes et des bornes électriques, dites bornes externes ou bornes de puissance, de l'accumulateur. Les bornes externes sont utilisées pour relier électriquement un accumulateur au circuit électrique externe.

Un module de stockage d'énergie, nommé également module de batterie, comprend généralement une association de ces accumulateurs en série, pour obtenir des tensions plus élevées, et en parallèle pour obtenir des capacités, et donc des énergies stockées, plus importantes.

De façon générale, il est intéressant de pouvoir augmenter les performances électriques d'un accumulateur électrochimique, par exemple sa capacité de charge pour stocker plus d'énergie, ou sa capacité de décharge pour fournir plus d'énergie.

On peut citer par exemple, la demande internationale WO2021/201354, qui divulgue un système de gestion de la durée de vie d'une batterie électrochimique, dans lequel, la batterie électrochimique peut être excitée à basses fréquences, inférieures à 0.001 Hz, et divers niveaux de pression de surface en utilisant un élément piézoélectrique. Mais le système est complexe et ne permet pas une amélioration significative des performances électriques d'un accumulateur électrochimique.

### RÉSUMÉ

Un objet de l'invention consiste à pallier ces inconvénients, et plus particulièrement à fournir des moyens pour améliorer les performances électriques d'un accumulateur électrochimique.

Selon un aspect de l'invention, il est proposé un procédé de gestion d'énergie, comprenant une fourniture d'un module de stockage d'énergie, le module comprenant au moins un accumulateur électrochimique, configuré pour stocker de l'énergie sous forme chimique, le procédé comprenant une application d'une pression sur ledit au moins un accumulateur électrochimique. La pression est appliquée de manière variable selon une fréquence strictement supérieure à 0.01 Hz et inférieure ou égale à 4 Hz.

Ainsi, on améliore la capacité de stockage, et de décharge d'un accumulateur. De manière surprenante, les inventeurs ont pu améliorer les performances électriques en appliquant des variations de pressions selon une fréquence strictement supérieure à 0.01 Hz et inférieure ou égale à 4 Hz.

Selon un autre aspect de l'invention, il est proposé un module de stockage d'énergie, comprenant au moins un accumulateur électrochimique, configuré pour stocker de l'énergie sous forme chimique, un dispositif de compression configuré pour appliquer une pression sur ledit au moins un accumulateur électrochimique. Le dispositif de compression comprend un système configuré pour faire varier la pression selon une fréquence strictement supérieure à 0.01 Hz et inférieure ou égale à 4 Hz.

### BRÈVE DESCRIPTION DES FIGURES

D'autres objets, caractéristiques et avantages de la présente invention apparaîtront à l'examen de la description détaillée et des dessins d'accompagnement suivants dans lesquels :
La figure 1 représente un mode de mise en oeuvre d'un procédé de gestion d'énergie ;
la figure 2 représente une courbe d'une pression appliquée à un accumulateur et une courbe d'une tension de l'accumulateur au cours du temps ;
la figure 3 représente des courbes de la tension d'un accumulateur en fonction de la capacité de charge pendant une charge de l'accumulateur ;
Les figures 4 à 7 représentent des courbes de la tension d'un accumulateur en fonction de la capacité de décharge pendant une décharge de l'accumulateur ;
Les figures 8 et 9 représentent des courbes de tension d'un accumulateur en fonction de la capacité de décharge pendant une décharge 2C de l'accumulateur à une pression de 20 bars ;
Les figures 10 à 12 représentent des courbes de tension d'un accumulateur en fonction de la capacité de décharge avec l'application d'une pression à une fréquence de 1 Hz (figure 10), 0.05 Hz (figure 11) et 0.1 Hz (figure 12) ;
Les figures 13 et 14 représentent des courbes de tension d'un accumulateur en fonction de la capacité de décharge pendant une décharge 2C de l'accumulateur avec l'application d'une pression à une fréquence entre 0 et 1 Hz avec une pression de 20 bars et une température de 20°C ;
Les figures 15 et 16 représentent des courbes de tension d'un accumulateur en fonction de la capacité de décharge pendant une décharge 2C (figure 15) et 1C (figure 16) de l'accumulateur à une température de 0°C ;
La figure 17 représente des courbes de tension d'un accumulateur en fonction du rapport en pourcentage entre le courant appliqué et la capacité nominale de l'accumulateur (% Cnom) pendant une décharge 2C de l'accumulateur à une température de 45°C ;
La figure 18 représente des courbes de tension d'un accumulateur en fonction de la capacité de décharge pendant une décharge 2C avec un démarrage de l'application de la pression sur l'accumulateur de 20 bars et 0.5 Hz retardé à partir de la demi-décharge ;
Les figures 19 et 20 représentent des courbes de tension d'un accumulateur en fonction de la capacité de charge (figure 19) ou en fonction de la variation de la charge par rapport à la variation de la tension aux bornes de l'accumulateur (figure 20) pendant une charge 4C de l'accumulateur à une température de 45°C ;
La figure 21 représente des courbes de tension d'un accumulateur simple ou multicouche en fonction du rapport en pourcentage entre le courant appliqué et la capacité nominale de l'accumulateur en question pendant une décharge 2C de l'accumulateur à une température de 20°C et une pression de 20 bars ;
La figure 22 représente des courbes de tension d'un accumulateur en fonction du rapport en pourcentage entre le courant appliqué et la capacité nominale de l'accumulateur pendant une décharge 2C et 5C de l'accumulateur à une température de 20°C et une pression de 20 bars, l'accumulateur étant un accumulateur simple avec une électrode positive en LMFP et une électrode négative en graphite ;
La figure 23 représente des courbes de tension d'un accumulateur en fonction de la capacité de décharge de l'accumulateur avec l'application d'une pression de 20 bars sur un banc de traction à une fréquence de 1 Hz et 2 Hz, ou à 1 Hz avec une vessie hydraulique servant de référence ;
Les figures 24 et 25 représentent des courbes de la tension d'un accumulateur (figure 24) ou de la compression mesurée en transverse de l'accumulateur (figure 25) et de la force appliquée sur celui-ci en fonction du temps, ces courbes ont été obtenues sur un banc de traction en phase de repos de l'accumulateur ; et
Les figures 26 et 27 représentent des courbes de la compression mesurée en transverse d'un accumulateur (figure 26) ou de la tension de l'accumulateur (figure 27) et de la force appliquée en transverse de celui-ci en fonction du temps, ces courbes ont été obtenues sur un banc de traction lors d'une décharge 2C de l'accumulateur ;

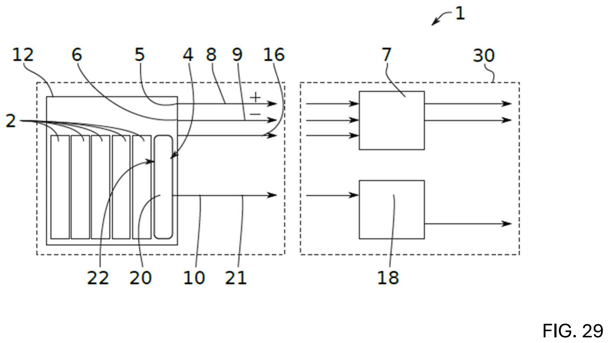

Les figures 28 et 29 représentent respectivement deux modes de réalisation d'un module de stockage d'énergie et d'une infrastructure de recharge associée.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mises en œuvre de l'invention, sont énoncées ci-après des caractéristiques optionnelles qui peuvent éventuellement être utilisées en association ou alternativement.

Selon un exemple, la pression est appliquée uniquement lors du fonctionnement du module de stockage d'énergie. Ainsi, la pression n'est pas appliquée lors des étapes de fabrication et d'assemblage du module de stockage d'énergie.

Selon un exemple, la pression est exclusivement appliquée lors de la charge et de la décharge de l'au moins un accumulateur électrochimique du module de stockage d'énergie.

Selon un exemple, la pression est appliquée sur au moins 70 %, de préférence au moins 80 % de préférence au moins 95 % et sensiblement la totalité de la surface de l'au moins un module de stockage d'énergie, par exemple de l'au moins un accumulateur électrochimique. De préférence, ladite surface est une surface exposée sensiblement parallèle au plan d'extension principale de l'au moins un module de stockage d'énergie, par exemple de l'au moins un accumulateur électrochimique.

Selon un exemple, la pression est appliquée directement sur ladite surface par le système 4, par exemple par la surface du système. La pression est ainsi appliquée sans intermédiaire entre la surface du module de stockage, par exemple de l'accumulateur, et le système d'application de la pression.

Selon un exemple, la pression est appliquée de manière variable selon une fréquence inférieure ou égale à 1 Hz.

Optionnellement, la pression est appliquée de manière variable de sorte que la pression soit supérieure ou égale à une pression minimale supérieure ou égale à 0,1 bar.

Eventuellement, la pression est appliquée de manière variable de sorte que la pression soit inférieure ou égale à une pression maximale inférieure ou égale à 50 bars.

Selon un exemple, la pression est appliquée de manière variable selon une variation d'amplitude de la pression supérieure ou égale à 1 bar.

Selon un autre exemple, la pression est appliquée de manière variable selon une variation d'amplitude de la pression inférieure ou égale à 10 bars.

Dans un mode de réalisation, le module comprend des première 5 et deuxième 6 bornes électriques, dites de puissance, couplées électriquement audit au moins un accumulateur électrochimique 2, et la pression est appliquée de manière variable lorsqu'un courant circule entre les première et deuxième bornes de puissance 5, 6.

Selon un exemple, un courant circule entre les première et deuxième bornes de puissance 5, 6 pendant un intervalle de temps de référence, et la pression est appliquée de manière variable selon une période (Tpulse) strictement inférieure à l'intervalle de temps de référence.

La pression peut être appliquée de manière variable selon un signal périodique.

Selon une option, la pression est appliquée de manière variable de sorte que l'amplitude de la pression est constante.

Dans un exemple, ledit au moins un accumulateur électrochimique 2 comprend un électrolyte liquide situé entre deux électrodes dudit au moins un accumulateur électrochimique 2.

Dans un mode de réalisation, le système 4 est configuré pour faire varier la pression selon une fréquence inférieure ou égale à 1 Hz.

Le système 4 est de préférence configuré pour faire varier la pression de sorte que la pression soit supérieure ou égale à une pression minimale supérieure ou égale à 0,1 bar.

Eventuellement, le système 4 est configuré pour faire varier la pression de sorte que la pression soit inférieure ou égale à une pression maximale inférieure ou égale à 50 bars.

Selon un exemple, le système 4 est configuré pour faire varier la pression selon une variation d'amplitude de la pression supérieure ou égale à 1 bar.

Dans un cas, le système 4 est configuré pour faire varier la pression selon une variation d'amplitude de la pression inférieure ou égale à 10 bars.

Un exemple est un module comprenant des première 5 et deuxième bornes électriques, dites de puissance, couplées électriquement audit au moins un accumulateur électrochimique 2, et dans lequel le système 4 est configuré pour faire varier la pression lorsqu'un courant circule entre les première et deuxième bornes de puissance 5, 6.

Dans un mode de réalisation, un courant circule entre les première et deuxième bornes de puissance 5, 6 pendant un intervalle de temps de référence, et le système 4 est configuré pour faire varier la pression selon une période (Tpulse) strictement inférieure à l'intervalle de temps de référence.

Le système 4 est par exemple configuré pour faire varier la pression selon un signal périodique.

Selon un cas, le système 4 est configuré pour faire varier la pression de sorte que l'amplitude de la pression est constante.

Possiblement, ledit au moins un accumulateur électrochimique 2 comprend un électrolyte liquide situé entre deux électrodes dudit au moins un accumulateur électrochimique 2.

Selon un exemple, le système 4 comprend une surface destinée à être en contact avec l'accumulateur pour appliquer la pression variable.

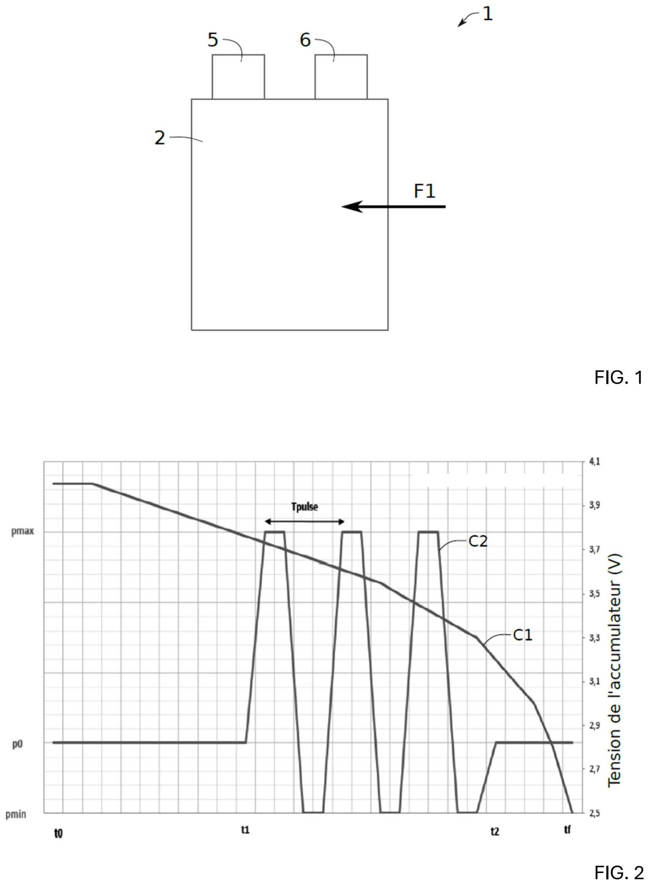

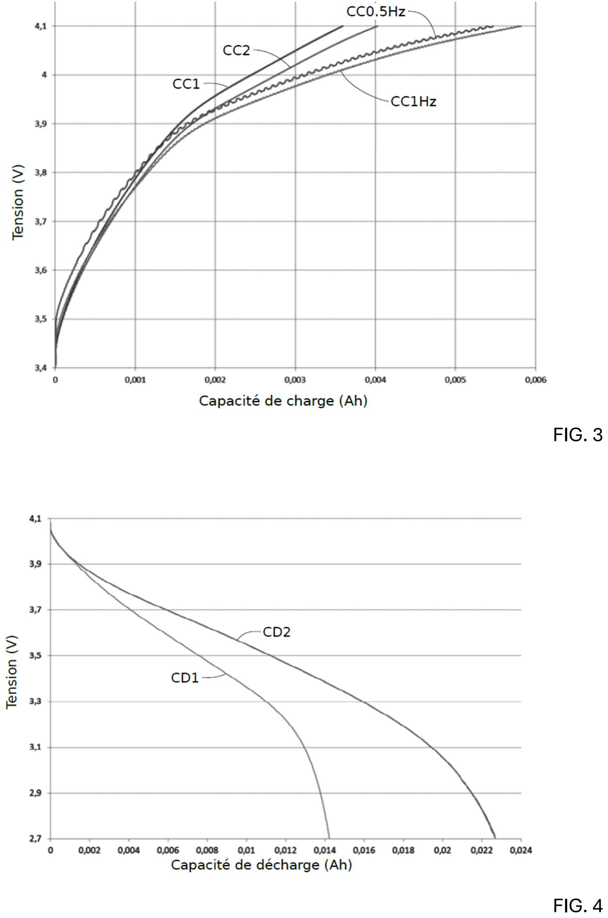

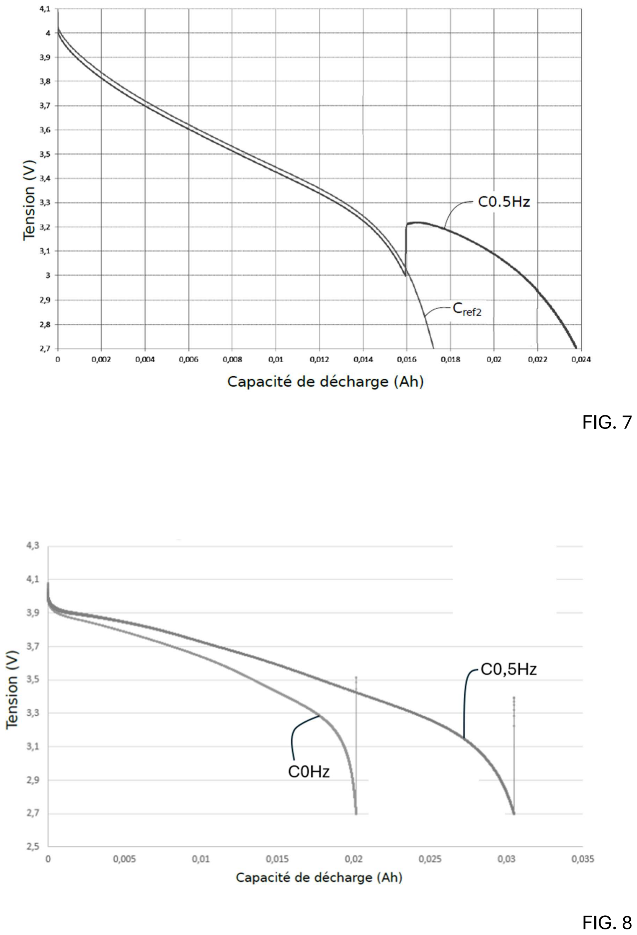

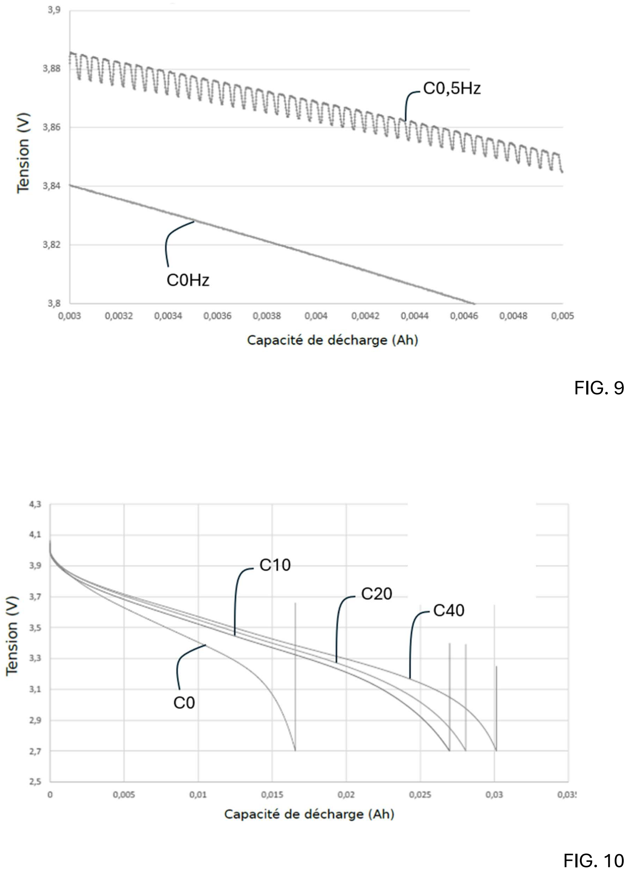

Sur les figures 1 et 2, on a représenté les principales étapes d'un procédé de gestion d'énergie. La notion de procédé de gestion d'énergie doit s'entendre au sens large, c'est-à-dire d'un procédé mis en œuvre à l'aide d'un dispositif de stockage d'énergie. Ainsi, le procédé de gestion permet de commander la charge (c'est-à-dire le stockage) et la décharge d'un dispositif de stockage d'énergie, ainsi que de possibles phases intermédiaires sans charge ou décharge du dispositif de stockage. Le procédé de gestion d'énergie n'est pas limité au seul procédé de charge (stockage) à proprement parler. Sur les figures 3 à 7, on a représenté différentes courbes illustrant les améliorations des performances électriques d'un accumulateur électrochimique à l'aide du procédé tel qu'illustré aux figures 1 et 2. Sur les figures 8 et 9, on a représenté des exemples de réalisation d'un module 1 de stockage d'énergie.

De manière générale, le module 1 comprend au moins un accumulateur électrochimique 2, dit cellule, et un dispositif de compression 3. Chaque accumulateur 2 est configuré pour stocker de l'énergie sous forme chimique. En particulier, un accumulateur 2 comprend un électrolyte liquide situé entre deux électrodes de l'accumulateur 2. De façon générale, le séparateur de l'accumulateur 2 est solide et poreux pour contenir un électrolyte liquide, l'électrolyte étant appelé également milieu conducteur ionique. De préférence, l'électrolyte est au moins en partie liquide. Selon un exemple, l'électrolyte peut être semi-liquide et ainsi se présenter sous différentes formes. Par exemple, l'électrolyte peut être liquide ou gélifié ou ayant une consistance intermédiaire entre liquide et gel, ou encore un mélange des deux, c'est-à-dire partiellement liquide et partiellement gélifié. De façon équivalente à un électrolyte semi-liquide, on peut considérer que l'électrolyte liquide est compris ou de façon équivalente contenu dans une matrice gélifiée.

Le dispositif de compression 3 est configuré pour appliquer une pression sur au moins un accumulateur 2.

En particulier, le dispositif de compression 3 comprend un système 4 configuré pour faire varier la pression selon une fréquence strictement supérieure à 0.01 Hz et inférieure ou égale à 4 Hz. C'est-à-dire que le système 4 est configuré pour faire varier la pression appliquée sur un accumulateur 2.

En outre, le procédé de gestion d'énergie comprend une fourniture du module 1 tel que décrit ci-avant, et une étape principale au cours de laquelle on applique, sur un accumulateur 2, une pression de manière variable selon une fréquence strictement supérieure à 0.01 Hz et inférieure ou égale à 4 Hz.

Avantageusement, lors d'une charge ou d'une décharge électrique d'un module 1, on applique sur une ou plusieurs cellules 2 une contrainte de compression mécanique F1 variable de manière à faire varier la pression exercée sur la ou les cellules 2. Par exemple, la variation de pression, c'est-à-dire la variation de l'amplitude de la pression, est inférieure ou égale à 10 bars. Plus particulièrement, la pression variable exercée sur l'accumulateur est supérieure ou égale à 0,1 bar, par exemple supérieure ou égale à 1 bar. Avantageusement, la variation de pression est inférieure ou égale à une pression maximale inférieure ou égale à 50 bars.

Par exemple, la contrainte F1 appliquée sur l'accumulateur 2 permet d'exercer une pression oscillant entre une valeur minimum (strictement supérieure à 0 bar) et une valeur maximum (de 50 bars). La fréquence des oscillations est comprise entre 0.01 Hz et 4 Hz, de préférence inférieure ou égale à 1 Hz.

Sur les figures 1, 8 et 9, on a représenté une infrastructure de recharge 30 associée à un module 1. Le module 1 comprend des première 5 et deuxième 6 bornes électriques, dites de puissance, couplées électriquement aux accumulateurs électrochimiques 2 du module 1. Les bornes de puissance 5, 6 sont destinées à être couplées électriquement à une infrastructure de recharge 30, par l'intermédiaire de connexions électriques 8, 9. L'infrastructure de recharge 30 comprend un circuit externe 7. Le circuit externe 7 peut être une source d'énergie électrique pour charger les accumulateurs 2 du module 1. En variante, le circuit externe 7 peut être un appareil électrique qui décharge les accumulateurs 2 pour fonctionner. De manière générale, le système de compression 4 peut être pilotable. Par exemple le système 4 peut être alimenté par un fluide 10 mis sous pression par un compresseur 11. Pour mettre en compression une ou plusieurs cellules 2 simultanément, le système 4 peut comprendre un actionneur fluidique 20 de type hydraulique ou pneumatique (par exemple une vessie gonflable). Une vessie présente l'avantage d'avoir un faible encombrement, de fournir une gamme de pression de service comprise entre 0 et 10 bars (pour une vessie pneumatique industrielle), et jusqu'à 250 bars (pour une vessie hydraulique industrielle), ainsi que d'être configurée pour être pilotée en pression. On note également qu'un actionneur pneumatique est particulièrement adapté pour des véhicules ou installations équipés de réseaux de fluide sous pression (pneumatique, refroidissement) déjà présents. En variante, le système peut comprendre d'autres dispositifs de compression réglables, tels que des vérins électriques, ou des actionneurs piézoélectriques, ou des actionneurs mécaniques à cames, ou des tendeurs à sangles ou à cordes, ...

Sur la figure 8, on a représenté un mode de réalisation, dans lequel le module 1 comprend un boitier 12 au sein duquel sont logés les accumulateurs 2. Le boitier 12 peut être intégré au sein d'une batterie 13. La batterie 13 comprend en outre deux bornes électriques 14, 15, dites principales, couplées électriquement, et respectivement, aux bornes de puissances 5, 6 du module 1. La batterie 13 peut comprendre une ligne de communication 16 pour échanger des données avec un circuit électronique extérieur, par exemple un circuit de gestion de batterie. Par exemple, la batterie 13 comprend un réservoir de fluide 17, un distributeur de fluide 18 couplé fluidiquement au réservoir 17 et à l'actionneur fluidique 20, de manière à gérer la quantité de fluide fournie à l'actionneur fluidique pour exercer la variation de pression sur au moins un accumulateur 2 du module 1. En outre, la batterie 13 comprend un compresseur 11 couplé fluidiquement au réservoir pour fournir à l'actionneur fluidique un fluide sous pression. Selon une variante illustrée à la figure 9, le distributeur de fluide 18, le réservoir 17 et le compresseur 11 sont situés à l'extérieur de la batterie 13. Dans ce cas, la batterie 13 est équipé d'un raccord fluidique 21 configuré pour coupler fluidiquement l'actionneur fluidique 20 du module 1 avec le distributeur de fluide 18.

Avantageusement, le système 4 comprend une surface 22 destinée à être en contact avec au moins un accumulateur 2 pour appliquer la pression variable sur l'accumulateur 2. Dans le cas de cellules prismatiques, la contrainte de compression peut par exemple être appliquée sur une face, dite principale, d'une cellule 2 (la cellule 2 étant isolée ou faisant partie d'un ensemble de cellules 2). En variante deux contraintes de compression peuvent être exercées sur les deux faces opposées d'une cellule isolée 2, ou sur les faces principales de deux cellules 2 situées aux extrémités d'un ensemble de cellule 2. De façon préférentielle, chaque contrainte de compression est exercée selon une direction orthogonale à une face principale.

Par exemple, la pression est appliquée de manière variable lorsqu'un courant circule entre les première et deuxième bornes de puissance 5, 6. C'est-à-dire qu'on choisit d'appliquer une pression variable sur les accumulateurs 2 lorsque les bornes de puissance 5, 6 sont couplées au circuit externe 7, pendant la charge ou la décharge des accumulateurs 2. Avantageusement, un courant circule entre les première et deuxièmes borne de puissance 5, 6 pendant un intervalle de temps de référence, et la pression est appliquée de manière variable selon une période strictement inférieure à l'intervalle de temps de référence. L'intervalle de temps de référence peut être le temps de charge du module 1, ou le temps de décharge du module 1. En d'autres termes, on peut appliquer la variation de pression à une fréquence relativement élevée par rapport au temps de charge ou au temps de décharge (par exemple de 0.1 à 4.0 Hz).

On a montré par l'expérience que cette mise en compression cyclique améliore la capacité restituée des cellules 2, et notamment lorsqu'on charge ou l'on décharge à faible température (c'est-à-dire pour des températures inférieures à 5°C).

On entend par capacité restituée, la quantité d'énergie stockée par le module 1.

Ainsi, les pulsations mécaniques favorisent la mobilité ionique (la mobilité ionique étant un facteur limitant la capacité de stockage d'énergie) par la création de convection au sein de l'électrolyte. Une des principales limitations des accumulateurs 2 est la conductivité ionique de leur électrolyte. La valeur de la conductivité ionique va déterminer la distance de migration possible des ions dans une électrode poreuse à un régime donné. Par exemple, pour un accumulateur à électrolyte aqueux plomb acide, la conductivité de l'électrolyte est de l'ordre de 100 mS/cm, ce qui permet de fabriquer des électrodes poreuses de l'ordre du mm d'épaisseur pour supporter des décharges de l'ordre de l'heure. Pour un accumulateur Lithium-ion, la conductivité de l'électrolyte est limitée à environ 10mS/cm, ce qui oblige à limiter l'épaisseur des électrodes à 0.1mm pour obtenir des performances acceptables sur des décharge d'une heure. En particulier sur les accumulateurs pour véhicules électriques avec une électrode négative d'environ 100µm d'épaisseur les procédés de l'art antérieur permettent de récupérer environ 90% de la capacité théorique pour une décharge d'une heure, mais seulement 40 à 80% de capacité pour une décharge de 30 minutes. Au niveau microscopique on peut l'expliquer par la mobilité limitée des ions lithium par rapport à un régime de courant donné. En effet, si la vitesse de réaction à l'interface des particules est plus rapide que la vitesse de migration/diffusion des ions dans l'électrolyte, alors un gradient de concentration se développe au sein de la structure poreuse de l'électrode. Lors d'une charge rapide, par exemple, la concentration disponible en ions dans la partie de l'électrode négative la plus éloignée du séparateur va diminuer jusqu'à 0 et il n'est alors plus possible de continuer la charge de l'accumulateur. Pour contourner cette limitation on peut tenter d'augmenter la conductivité de l'électrolyte (par exemple en augmentant la température quand cela est possible) ou diminuer l'épaisseur des électrodes au détriment de la densité d'énergie de la cellule.

Ainsi, grâce aux pulsations mécaniques, on crée une convection au sein de l'électrolyte pour limiter les gradients de concentration en ion.

En comprimant la cellule 2 on la déforme. Pour une pression de 10 bars ou 1Mpa, l'anode, la cathode et le séparateur d'une cellule 2 vont se déformer de quelques micromètres. L'application de la pression sur l'accumulateur électrochimique 2 est configurée de sorte à déformer l'anode, la cathode et le séparateur de l'accumulateur électrochimique 2 selon une dimension transversale à celui-ci. La dimension transversale de l'accumulateur correspond à une direction sensiblement perpendiculaire au plan d'extension principale de l'accumulateur, c'est-à-dire selon l'épaisseur des anode, cathode et séparateur. De préférence, l'électrode est déformée dans une seule direction correspondant à la dimension transverse de l'électrode de l'accumulateur électrochimique 2. La déformation de la cellule 2 implique un déplacement D. Le déplacement D peut plus particulièrement être une variation d'épaisseur, et en particulier un écrasement de l'épaisseur de l'accumulateur par rapport à son épaisseur initiale. Cette variation d'épaisseur D peut de préférence avoir lieu de façon non-ponctuelle sur au moins une partie de la surface de l'accumulateur et de préférence sur sensiblement la totalité de la surface de la cellule 2. Il existe donc une relation directe entre le déplacement D, de préférence la variation d'épaisseur de la cellule 2 et la pression appliquée sur l'électrode.

Selon un exemple, cette déformation est une déformation élastique. La déformation D peut typiquement être de l'ordre du micron, par exemple comprise entre 1 et 10 µm, pour une épaisseur de l'accumulateur comprise entre 100 µm et 400 µm, par exemple sensiblement égale à 200 µm.

Selon un exemple, la gamme de fréquence de la pression appliquée sur l'au moins un accumulateur électrochimique 2 est de préférence comprise entre 0.1 Hz et 2 Hz.

La pression doit être suffisante pour déformer la cellule (c'est-à-dire que la variation de pression est supérieure ou égale à 0.1bar), mais assez faible pour ne pas la dégrader (<50 bars).

D'autre part, pour égaliser les gradients de concentration la fréquence de la compression cyclique est de préférence plus importante que le temps de décharge (par exemple strictement supérieure à 1 mHz).

Ainsi, lors d'une charge ou d'une décharge électrique, on applique sur une ou plusieurs cellules 2 une contrainte de compression mécanique F1 oscillant entre une valeur minimum et une valeur maximum, à une fréquence élevée, c'est-à-dire une fréquence strictement supérieure à 0.01 Hz.

Sur la figure 2, on a représenté schématiquement une courbe C1 de la décharge électrique d'une cellule 2 du module 1, ainsi qu'une courbe C2 de la pression mécanique appliquée sur une cellule 2. Par exemple, la décharge se déroule entre les temps t0 et tf.

Un temps de démarrage t1 correspond à l'instant du démarrage des pulsations, c'est-à-dire des variations de pression. Le temps de démarrage t1 est compris en t0 et tf. Par exemple, dans le cas où t1 est égal à t0, alors les pulsations sont appliquées dès le début de la décharge. Avantageusement, le temps de démarrage t1 peut être défini selon une tension aux bornes de puissance 5, 6, un état de charge SoC du module 1, un état de santé SoH du module 1, une exigence de conformité SoX du module 1, une température, ou une combinaison des différents paramètres précités. Par exemple, le temps de démarrage t1 peut être l'instant où la tension est passée sous la barre de 3V.

Un temps d'arrêt t2 correspond à l'instant de l'arrêt des pulsations. Le temps d'arrêt t2 peut être compris en t0 et tf. Par exemple, dans le cas où le temps d'arrêt t2 est égal à tf, alors les pulsations sont appliquées jusqu'à la fin de la décharge. Le temps d'arrêt t2 peut également être défini selon la tension aux bornes de puissance 5, 6, l'état de charge SoC du module 1, l'état de santé SoH du module 1, l'exigence de conformité SoX du module 1, la température, ou une combinaison des différents paramètres précités.

De façon générale, une pression initiale p0 est appliquée sur les cellules 2 du module 1 en fonctionnement normal du module 1. La pression initiale p0 correspond à la pression recommandée par le fabricant de cellules 2 lors de son utilisation nominale. En générale, la pression initiale p0 se situe en dessous d'une pression maximum acceptable pacc par les cellules 2 sans risquer de les endommager. La pression initiale p0 se situe entre 0 et 10 bars, de préférence la pression initiale p0 est comprise entre 0.1 et 1 bar.

Une pression maximum pmax est appliquée sur les cellules 2 lors des pulsations. La pression maximum pmax se situe en dessous de la pression maximum acceptable pacc par les cellules 2. Avantageusement, la pression maximum pmax peut être strictement supérieure à la pression initiale p0 afin d'assurer une déformation suffisante de la cellule 2. La pression maximum pmax peut être comprise entre 0,1 et 50 bars. De préférence, la pression maximum pmax est comprise entre 5 et 20 bars.

Une pression minimum pmin est appliquée sur les cellules lors des pulsations. Une différence entre la pression minimum pmin et la pression maximum pmax assure une déformation suffisante des cellules 2. Par exemple, la pression minimum pmin se situe entre 0 et 5 bars.

Selon une variante, les pressions minimum pmin et maximum pmax sont inférieures ou égales à la pression initiale p0. Selon un autre exemple, la pression minimum pmin est inférieure ou égale à la pression initiale p0 et la pression maximum pmax est strictement supérieure à la pression initiale p0. Selon une autre variante, les pressions minimum pmin et maximum pmax sont supérieures ou égales à la pression initiale p0. Dans tous les cas, la pression maximum pmax est strictement supérieure à la pression minimum pmin afin d'assurer une déformation des cellules 2.

Une période de pulsation Tpulse correspond à la période des pulsations de pression mécanique. La fréquence des pulsations est élevée par rapport au temps caractéristique de décharge (ou de charge), de manière à effecteur plusieurs pulsations lors d'une décharge ou d'une charge. On note que lorsque la fréquence des pulsations augmente, on améliore les performances électriques du module 1. La période de pulsation Tpulse est par exemple comprise entre 0,25 s et 10 s (soit la fréquence des pulsations est comprise entre 0.1 Hz et 4 Hz). Par exemple, la période de pulsation peut être égale à 1 ou 2 s.

Par exemple, la pression est appliquée de manière variable selon un signal périodique. En variante, les signaux sont symétriques, par exemple le temps où la pression est supérieure à une pression de référence pref est égal au temps où la pression est inférieure à la pression de référence. La pression de référence pref est comprise entre pmin et pmax, par exemple la pression de référence pref est égale à la pression initiale p0.

Selon un autre exemple, la pression est appliquée de manière variable de sorte que l'amplitude de la pression est constante.

Sur la figure 3, on a représenté différentes courbes d'un premier essai, avec en abscisse la capacité de charge en ampère heure et en ordonnée la tension aux bornes de puissance 5, 6 en volt. On a représenté une première courbe de charge CC1 de la capacité de charge lorsque la pression initiale p0 est égale à 20 bars et qu'il n'y a pas de variation de pression exercée sur une cellule 2 du module 1. On a représenté une deuxième courbe de charge CC2 de la capacité de charge lorsque la pression initiale p0 est égale à 1 bar et qu'il n'y a pas de variation de pression exercée sur une cellule 2 du module 1. On a représenté une troisième courbe de charge CC0.5Hz de la capacité de charge lorsque la pression initiale p0 est égale à 20 bars et qu'on applique une variation de pression sur une cellule 2 du module 1 avec une fréquence égale à 0.5 Hz. On a représenté une quatrième courbe de charge CC1Hz de la capacité de charge lorsque la pression initiale p0 est égale à 20 bars et qu'on applique une variation de pression sur une cellule 2 du module 1 avec une fréquence égale à 1 Hz. Le premier essai permet d'illustrer que les pulsations augmentent la capacité de charge du module 1. Par ailleurs, le premier essai montre qu'une variation de pression à 0.5 Hz augmente de 35 % la capacité de charge, et à 1 Hz, une augmentation de 60 % de la capacité de charge. Ainsi, une augmentation de la fréquence des pulsations améliore les performances électriques du module 1.

Sur la figure 4, on a représenté deux courbes d'un deuxième essai, avec en abscisse la capacité de décharge en ampère heure et en ordonnée la tension aux bornes de puissance 5, 6 en volt. On a représenté une première courbe de décharge CD1 de la capacité de décharge lorsque la pression initiale p0 est égale à 1 bar et qu'il n'y a pas de variation de pression exercée sur une cellule 2 du module 1. On a représenté une deuxième courbe de décharge CD2 de la capacité de décharge lorsque la pression initiale p0 est égale à 20 bars et qu'on applique une variation de pression sur une cellule 2 du module 1 avec une fréquence égale à 0.5 Hz. Le deuxième essai permet d'illustrer que les pulsations augmentent la capacité de décharge du module 1. Par ailleurs, le deuxième essai montre qu'une variation de pression à 0.5 Hz augmente de 60 % la capacité de décharge. Ainsi, une variation de la pression exercée sur une cellule 2 améliore les performances électriques du module 1.

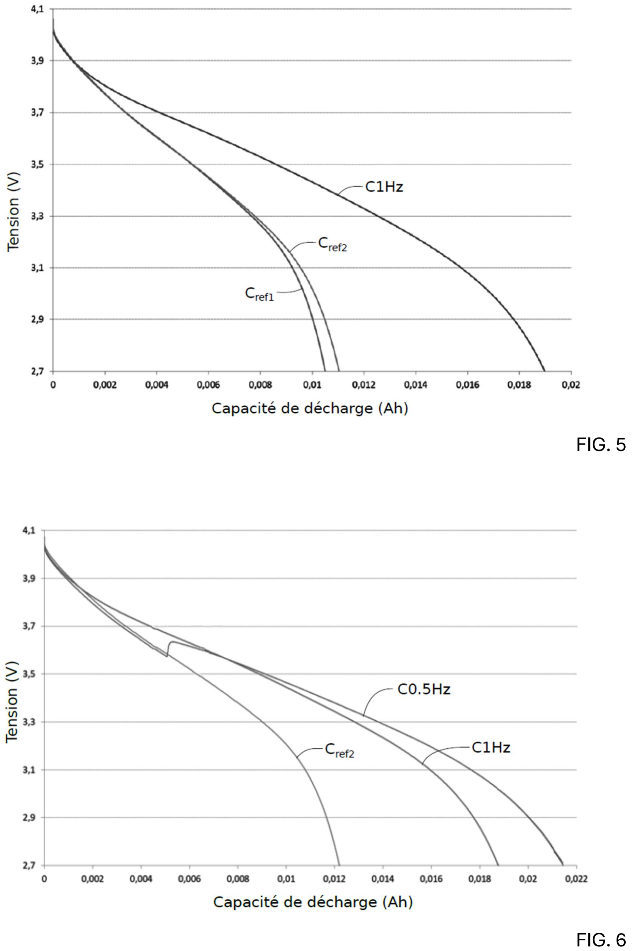

Sur la figure 5, on a représenté différentes courbes d'un troisième essai, avec en abscisse la capacité de décharge en ampère heure et en ordonnée la tension aux bornes de puissance 5, 6 en volt. On a représenté une première courbe de référence Cref1 de la capacité de décharge lorsque la pression initiale p0 est égale à 20 bars et qu'il n'y a pas de variation de pression exercée sur une cellule 2 du module 1. On a représenté une deuxième courbe de référence Cref2 de la capacité de décharge lorsque la pression initiale p0 est égale à 1 bar et qu'il n'y a pas de variation de pression exercée sur une cellule 2 du module 1. On a représenté une troisième courbe C1Hz de la capacité de décharge lorsque la pression initiale p0 est égale à 20 bars et qu'on applique une variation de pression sur une cellule 2 du module 1 avec une fréquence égale à 1 Hz. Le troisième essai permet d'illustrer que l'amélioration des performances électriques du module 1 n'est pas uniquement dû à l'application d'une pression élevée qui pourrait diminuer les résistances aux interfaces. La cellule déchargée selon la première courbe de référence Cref1 à 20 bars constant présente la même décharge que dans un montage de référence Cref2 à 1 bar constant. Seule l'application d'une variation de pression à 1Hz améliore la capacité déchargée.

Sur la figure 6, on a représenté différentes courbes d'un quatrième essai, avec en abscisse la capacité de décharge en ampère heure et en ordonnée la tension aux bornes de puissance 5, 6 en volt. On a représenté une première courbe de référence Cref2 de la capacité de décharge lorsque la pression initiale p0 est égale à 1 bar et qu'il n'y a pas de variation de pression exercée sur une cellule 2 du module 1. On a représenté une deuxième courbe C1Hz de la capacité de décharge lorsque la pression initiale p0 est égale à 15 bars et qu'on applique une variation de pression sur une cellule 2 du module 1 avec une fréquence égale à 1 Hz. On a représenté une troisième courbe C0.5Hz de la capacité de décharge lorsque la pression initiale p0 est égale à 20 bars et qu'on applique une variation de pression sur une cellule 2 du module 1 avec une fréquence égale à 0.5 Hz. En outre, d'après la troisième courbe C0.5Hz, le démarrage des pulsations est effectué en cours de décharge, c'est-à-dire que le temps de démarrage t1 des pulsations est supérieur au temps de démarrage t0 de la décharge du module 1. Le quatrième essai montre que des pulsations même déclenchées tardivement (t1>t0) augmentent la capacité restituée lors d'une décharge.

Sur la figure 7, on a représenté deux courbes d'un cinquième essai, avec en abscisse la capacité de décharge en ampère heure et en ordonnée la tension aux bornes de puissance 5, 6 en volt. On a représenté une première courbe de référence Cref2 de la capacité de décharge lorsque la pression initiale p0 est égale à 1 bar et qu'il n'y a pas de variation de pression exercée sur une cellule 2 du module 1. On a représenté une deuxième courbe C0.5Hz de la capacité de décharge lorsque la pression initiale p0 est égale à 20 bars et qu'on applique une variation de pression sur une cellule 2 du module 1 avec une fréquence égale à 0.5 Hz. En outre, d'après la deuxième courbe C0.5Hz, le démarrage des pulsations est effectué tardivement en cours de décharge, c'est-à-dire que le temps de démarrage t1 des pulsations est très supérieur au temps de démarrage t0 de la décharge du module 1. Le quatrième essai montre que des pulsations même déclenchées très tardivement (t1>(tf/2)) augmentent la capacité restituée lors d'une décharge. En l'occurrence, en démarrant les pulsations vers la fin de la décharge, on obtient une amélioration de 38 % de la capacité de décharge de la cellule 2.On peut en outre améliorer les performances à basse température, dans le cas où la mobilité ionique dans l'électrolyte devient très limitante, c'est-à-dire lorsque la température de l'environnement du module 1 est inférieur ou égal à 5°C, par exemple à 0 °C.

Le procédé décrit permet également dans le cas de cellules Li-ion chargées rapidement (temps de charge <1h) d'éviter le phénomène de dépôt de lithium (appelé « Li plating » en langue anglaise) sur l'électrode négative.

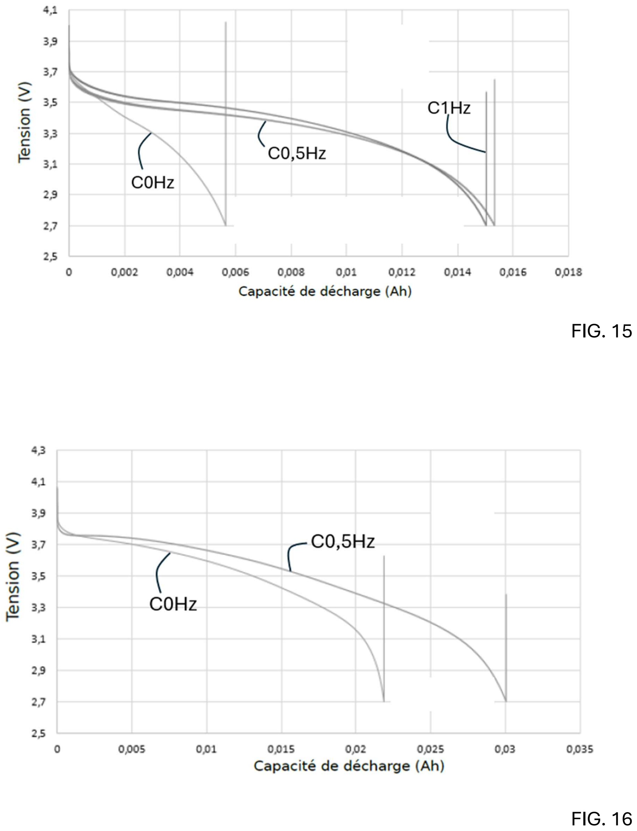

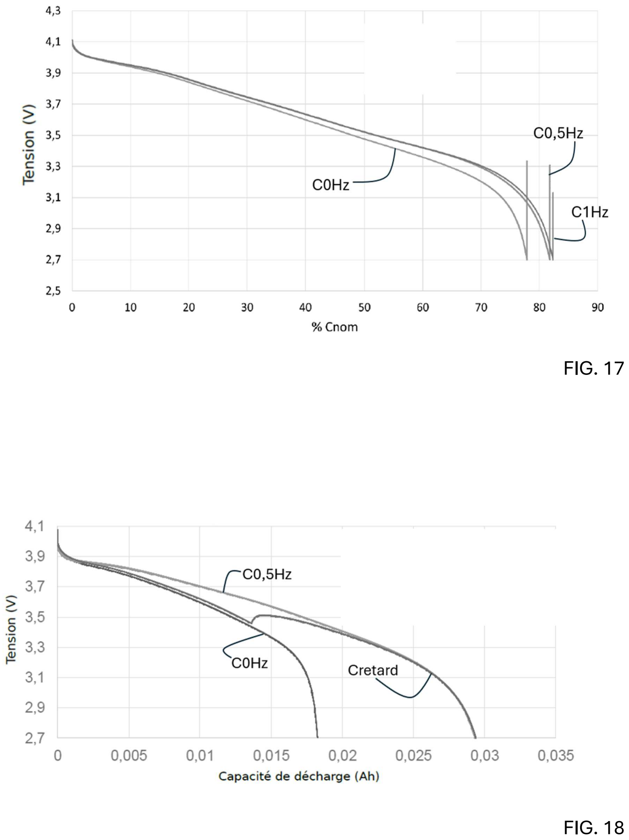

Les figures 8 à 27 présentent les résultats expérimentaux de plusieurs exemples de réalisation particuliers et non limitatifs. Les figures 8 à 18 illustrent des résultats selon des exemples particuliers qui ont été réalisés avec un cas d'application en décharge sur une cellule 2 ne contenant qu'une seule couche active, c'est-à-dire une seule électrode négative, une seule électrode positive et séparées par un seul séparateur. Ce type de cellule sera appelé « cellule simple » dans le reste de la description par opposition aux cellules multicouches. Pour tous ces tests, la cellule 2 comprend ainsi une électrode positive simple face de 32 par 32 mm en NMC pour nickel, manganèse et cobalt, un séparateur de 40 par 40 mm et une électrode négative simple face de 35 par 35 mm en graphite, la capacité nominale de cette cellule 2 est de 40 mAh. Les paramètres de test évalués sont la pression pour les figures 8 et 9, la fréquence d'application de la pression pour les figures 10 à 14, la température et le régime pour les figures 15 et 17 et le temps de démarrage pour la figure 18.

Les figures 8 à 27 ont été réalisées avec un montage où la cellule 2 est placée entre une plaque fixe et une vessie gonflée à l'air comprimé, la force exercée sur la cellule 2 est comprise entre 100 N lors de la précontrainte et 2000 N. En ce qui concerne les essais en simple cellule 2, la pression exercée sur la cellule 2 de 10 cm² est comprise entre 1 et 40 bars.

Sur les figures 8 et 9, on a représenté différentes courbes d'un essai caractérisant l'influence de la sollicitation en pression de la cellule 2, avec en abscisse la capacité de charge en ampère heure et en ordonnée la tension aux bornes de puissance 5, 6 en volt. Les figures 8 et 9 présentent les mêmes courbes, la figure 8 étant représentée à une échelle d'abscisse entre 0 et 0.035 Ah et la figure 9 à une échelle d'abscisse entre 0 et 0.005 Ah. La cellule 2 a été déchargée à un taux de 2C, c'est-à-dire à un courant égal à deux fois sa capacité nominale, sur une plage de tension comprise entre 4.1 et 2.7 V. Sur ces figures, on a représenté une première courbe C0Hz de la capacité de charge lorsque la pression maximale appliquée Pmax est égale à 20 bars et qu'il n'y a pas de variation de pression exercée sur la cellule 2. La courbe C0Hz sert ainsi de courbe de référence. Par ailleurs, on a représenté une deuxième courbe C0.5Hz de la capacité de charge lorsque la pression maximale appliquée Pmax est égale à 20 bars et qu'on applique une variation de pression sur la cellule 2 avec une fréquence égale à 0.5 Hz. Ces essais permettent d'illustrer le fait que les sollicitations en pression augmentent la capacité de charge de la cellule 2. En outre, ces essais montrent que l'application d'une variation de pression de 20 bars avec une fréquence de 0.5 Hz augmente de 50 % la capacité de charge de la cellule 2. Ainsi, l'application d'une variation de pression sur la cellule 2 avec une fréquence égale à 0.5 Hz améliore les performances électriques de la cellule 2.

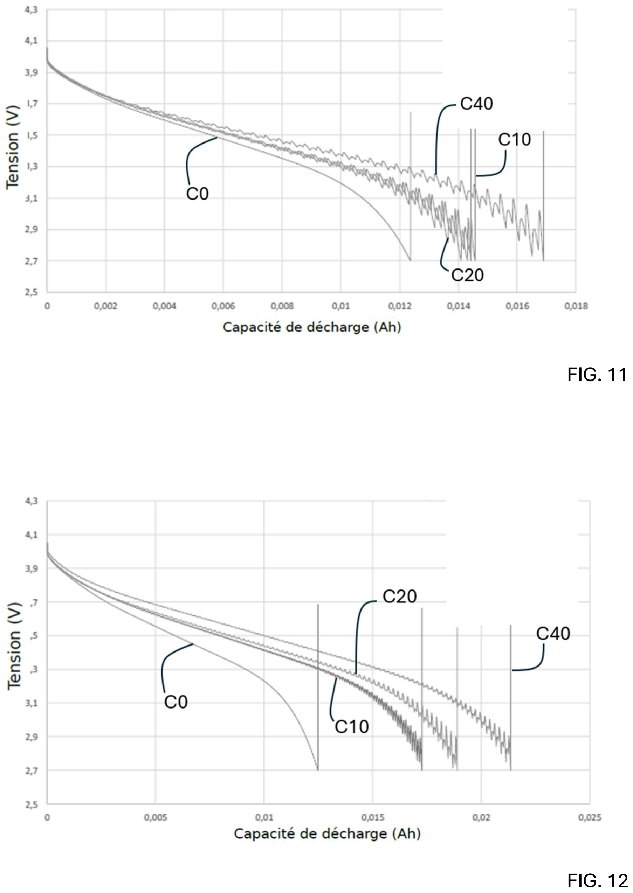

Sur les figures 10 à 12, l'influence de la pression a été caractérisée pour différentes fréquences de sollicitation en pression et pour une température de 20 degrés Celsius. La figure 10 correspond à l'application d'une variation de pression sur la cellule 2 avec une fréquence égale à 0.5 Hz. La figure 11 correspond à l'application d'une variation de pression sur la cellule 2 avec une fréquence égale à 0.05 Hz. La figure 12 correspond à l'application d'une variation de pression sur la cellule 2 avec une fréquence égale à 0.1 Hz. Sur les figures 10 à 12 les courbes C0, C10, C20 et C40 représentent respectivement une pression appliquée sur la cellule 2 égale à 0 (référence), 10 bars, 20 bars et 40 bars. L'augmentation de pression appliquée sur la cellule 2 augmente les performances en décharge de la cellule 2, quelle que soit la fréquence utilisée. Cependant, pour éviter de dégrader la cellule 2, on se limite à un maximum de 40 bars.

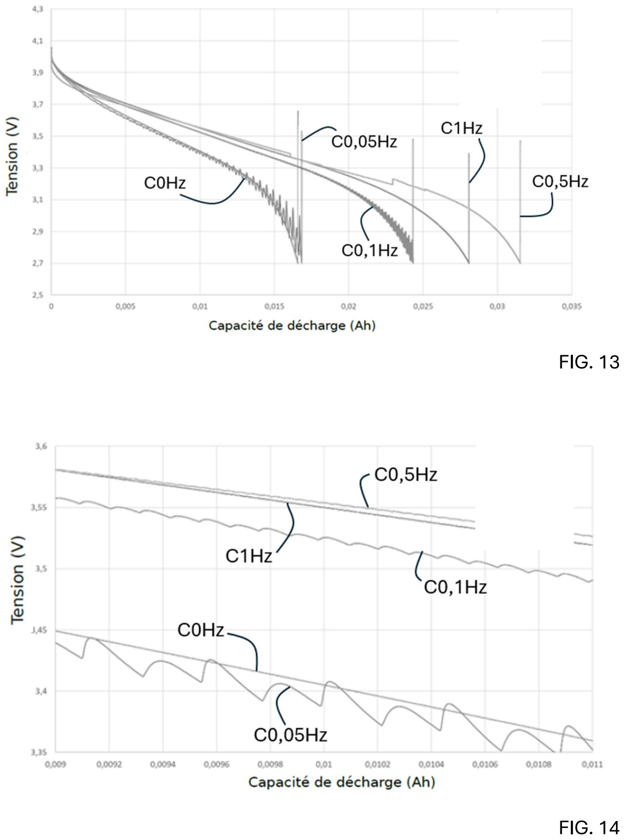

Sur les figures 13 et 14, l'influence de la fréquence des sollicitations en pression a été caractérisée. La courbe C1Hz, C0.5Hz, C0.1Hz, C.05Hz et C0Hz correspondent respectivement à l'application d'une variation de pression sur la cellule 2 avec une fréquence égale à 1 Hz, 0.5 Hz, 0.1 Hz, 0.05 Hz et 0 Hz, 0 Hz correspondant à aucune variation de pression appliquée sur la cellule 2. Les figures 13 et 14 présentent les mêmes courbes, la figure 13 étant représentée à une échelle d'abscisse entre 0 et 0.035 Ah et la figure 14 à une échelle d'abscisse entre 0.009 et 0.0011 Ah. La pression appliquée sur la cellule 2 est de 20 bars et la température de 2°C. Ces essais montrent qu'un optimum est atteint à 0.5 Hz. En outre, ces essais sont reproductibles sur trois autres types de cellule 2 simple, ne contenant qu'une seule couche active.

Sur les figures 15 et 16, l'influence de la fréquence de décharge a été caractérisée à une température de 0°C. Pour la figure 15, la cellule 2 a ainsi été déchargée à un taux de 2C, c'est-à-dire à un courant égal à deux fois sa capacité nominale. Pour la figure 16, la cellule 2 a été déchargée à un taux de 1C, c'est-à-dire à un courant égal à sa capacité nominale. La figure 15 illustre le fait que l'application d'une variation de pression à une fréquence de 0.5 Hz à 0°C augmente de 170 % la capacité de décharge de la cellule 2 à un taux de 2C. La figure 16 montre que l'application d'une variation de pression à une fréquence de 0.5 Hz à 0°C augmente de 40 % la capacité de décharge de la cellule 2 à un taux de 1C. Ainsi, l'application d'une variation de pression sur la cellule 2 avec une fréquence égale à 0.5 Hz améliore les performances électriques de la cellule 2 à 0°C.

Sur la figure 17, l'influence de la fréquence de décharge a été caractérisée pour une température de 45°C. La cellule 2 a été déchargée à un taux de 2C. Les courbes sont représentées avec pour abscisse le rapport en pourcentage entre le courant appliqué à la cellule 2 et sa capacité nominale, nommé « % Cnom » et en ordonnée la tension aux bornes de puissance 5, 6 en volt.

À la suite des essais illustrés par les figures 15 à 17, on observe un gain sur les performances de la cellule 2 en fonction de la température et du régime de décharge. L'effet est d'autant plus visible lorsque la cellule 2 opère dans des conditions difficiles, c'est-à-dire quand elle est très limitée par le transport de matière. C'est par exemple le cas lorsque le courant de décharge de la cellule 2 est élevé ou lorsque la température est basse car dans ce cas-là, l'électrolyte est moins conducteur. Le tableau suivant regroupe les résultats obtenus pour plusieurs essais avec des température allant de -20°C à 45°C et des régimes de décharge de C/3 à 3C.

| Régime /Temperature | 45°C | 20°C | 0°C | -20°C |
|---|---|---|---|---|
| C/3 | | | 4% | 9% |
| 1C | | 4% | 37% | 61% |
| 2C | 5% | 47% | 172% | |
| 3C | 41% | 78% | | |

Ainsi, comme le montre le tableau, dans tous les cas, une amélioration des performances de la cellule 2 est observée.

La figure 18 montre des courbes avec en abscisse la capacité de charge en ampère heure et en ordonnée la tension aux bornes de puissance 5, 6 en volt. La courbe Cretard est caractérisée par un démarrage retardé de l'application de la variation de pression sur la cellule 2 à 0.5 Hz à partir de la demi-décharge. Les courbes C0Hz et C0.5Hz correspondent à l'application d'une variation de pression de 0 (référence) et de 0.5Hz à partir du démarrage de la phase de décharge de la cellule 2. Ces courbes illustrent le fait que la sollicitation en pression de la cellule 2 n'est pas nécessaire pendant toute la durée de la décharge pour obtenir une augmentation des performances de la cellule 2.

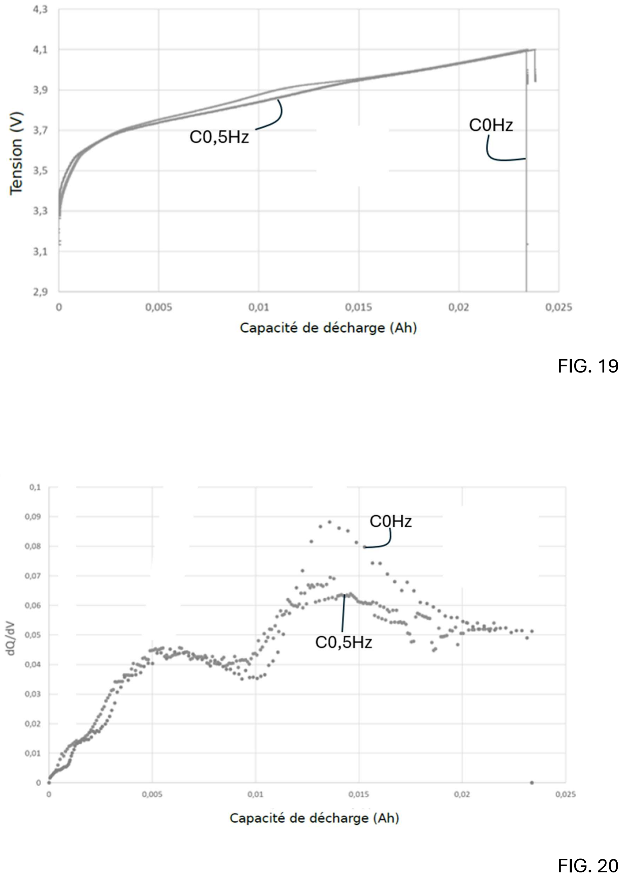

Les figures 19 et 20 présentent les résultats d'une deuxième phase de test complémentaire qui a été réalisée avec la même cellule 2 que pour la première phase de test concernant les figures 8 à 18. La cellule 2 a été évaluée en charge rapide à 4C, c'est-à-dire à un courant égal à quatre fois sa capacité nominale et à une température de 45°C. La figure 20 à pour abscisse la capacité de charge en ampère heure et en ordonnée une grandeur nommée « dQ/dv » correspondant à la variation de la charge par rapport à la variation de la tension aux bornes de puissance 5, 6 en volt. Sur cette figure 20, les deux courbes C0Hz et C0.5Hz correspondent à 0 (référence) et 0.5 Hz de fréquence de sollicitation en pression de la cellule 2. Ces deux courbes C0Hz et C0.5Hz illustrent le premier et le deuxième stade d'insertion des ions lithium dans le graphique. Le deuxième stade d'insertion correspond aux premiers pics marqués sur les deux courbes C0Hz et C0.5Hz. Ensuite, ces courbes C0Hz et C0.5Hz montrent le phénomène nommé « Li-plating » correspondant aux deuxièmes pics marqués sur les courbes C0Hz et C0.5Hz. Le Li-plating ou dépôt de lithium métallique est un phénomène où du lithium se dépose sous forme métallique à la surface de l'électrode négative au lieu de s'insérer correctement dans sa structure pendant la charge. Cela se produit lorsque l'électrode négative ne peut plus accepter les ions lithium assez rapidement. Comme on peut le voir sur la figure 20, le phénomène de Li-plating est diminué entre la courbe C0Hz et la courbe C0.5Hz qui présente un pic plus faible en amplitude. Ces deux figures illustrent donc la diminution du phénomène de Li-plating en charge rapide lors de la mise en œuvre d'un procédé de gestion d'énergie.

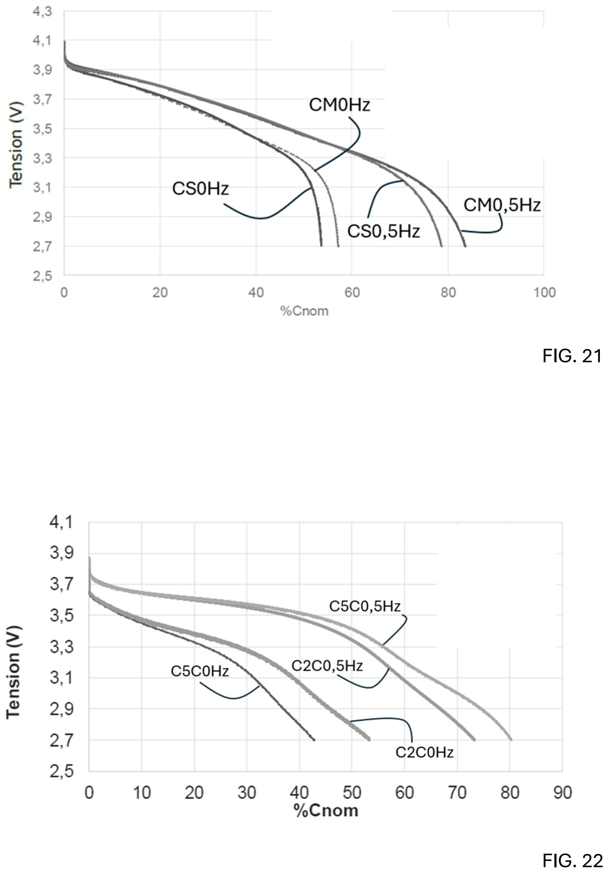

Les figures 21 et 22 présentent les résultats d'une troisième phase de test avec d'autres types de cellule. Ces essais ont été réalisé avec la même cellule 2 comprenant une seule couche telle que décrit dans la première et la deuxième phase de test concernant les figures 8 à 20. Par ailleurs, une cellule 2 multicouche a aussi été utilisée lors de cette troisième phase de test, cette cellule 2 multicouche comprenant 5 électrodes négatives de 52 par 52 mm, 4 électrodes positives de 50 par 50 mm et 8 séparateurs, la capacité nominale de cette cellule 2 multicouche étant de 800 mAh. Les paramètres étudiés lors de cette phase de test sont la conception des cellules 2 et la chimie de l'électrode positive.

La figure 21 représente des courbes obtenues pour une décharge à un taux de 2C des cellules 2, à une température de 20°C et pour une pression de 20 bars. Les courbes correspondant à la cellule 2 simple sont les courbes CSOHz et CS0.5Hz pour respectivement 0 et 0.5 Hz de variation de pression appliquée sur la cellule 2 simple. Les courbes correspondant à la cellule 2 multicouche sont les courbes CM0Hz et CM0.5Hz pour respectivement 0 et 0.5 Hz de variation de pression appliquée sur la cellule 2 multicouche. Ces courbes montrent un gain en performance entre 0 et 0.5 Hz de +47 % pour une cellule 2 simple et de +38 % pour une cellule 2 multicouche. Un effet similaire à celui observé pour une cellule 2 simple est ainsi observé pour une cellule 2 multicouche, la compression se propageant dans les différentes couches de la cellule 2.

La figure 22 illustre l'influence de la chimie de l'électrode positive. L'électrode positive utilisée pour cet essai est de type LMFP pour lithium manganèse fer phosphate avec une cellule 2 simple d'une capacité nominale de 35 mAh comprenant une électrode positive en LiFe_{0,3}Mn_{0,7}PO₄ et une électrode négative en graphite. La décharge est réalisée à un taux de 2C (courbes C2COHz et C2C0.5Hz) ou à un taux de 5C (courbes C5C0Hz et C5C0.5Hz) entre 4.2 et 2.7 V et les sollicitations en pression sont réalisées avec une fréquence de 0.5 Hz à 20 bars. De cette manière, on observe un gain d'environ +10 % de capacité, l'effet étant aussi présent sur d'autres espèces chimiques que le LMFP pour l'électrode positive.

Selon un exemple pour une décharge à un taux de 2C d'une cellule 2 simple de 10 cm² à 20 bars avec 6 pulsations de 12 compressions et décompressions sur l'ensemble du cycle de décharge de 23 minutes à 0.5 Hz, l'énergie gagnée par rapport à la courbe de référence pour la même cellule 2 simple à 0 Hz est de 130 J. Après une série de calcul prenant en compte la consommation énergétique du système de vessie pneumatique qui est d'environ 8.4 J, on estime que 6 % de l'énergie gagnée lors de la décharge de la cellule 2 est utilisée pour faire les sollicitations en pression. Ainsi, on observe un gain d'énergie de 94 % en retirant l'énergie nécessaire à l'application de la variation de pression sur la cellule 2.

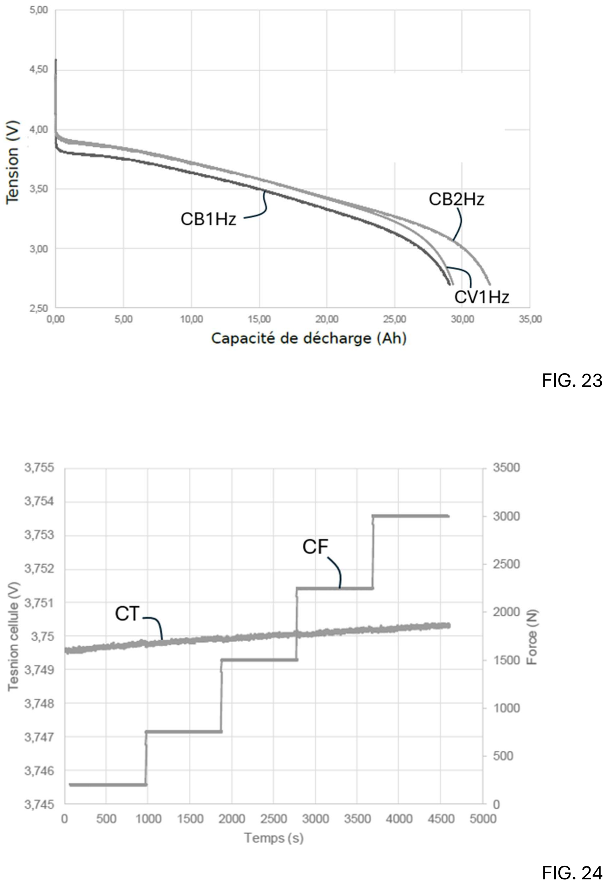

Sur la figure 23, une comparaison de test a été réalisée avec un banc de test plus réactif. Ces tests ont été effectués sur un banc de test avec une pression de 20 bars et une fréquence de sollicitation de la cellule 2 de 1 Hz et 2 Hz pour les courbes CB1Hz et CB2Hz. Les autres tests, servant de référence, ont été réalisés à l'aide d'un montage avec une vessie pneumatique à une fréquence de 1 Hz correspondant à la courbe CV1Hz. Les résultats obtenus pour une variation de pression à une fréquence de 1 Hz sont similaires à ceux précédemment décrit et encore meilleur pour une fréquence de 2 Hz.

Les figures 24 à 27 présentent les résultats de caractérisations mécaniques sur un banc de traction et de compression pour une cellule 2 simple de 10 cm² avec une électrode positive de type NMC pour nickel manganèse cobalt et une électrode négative en graphite.

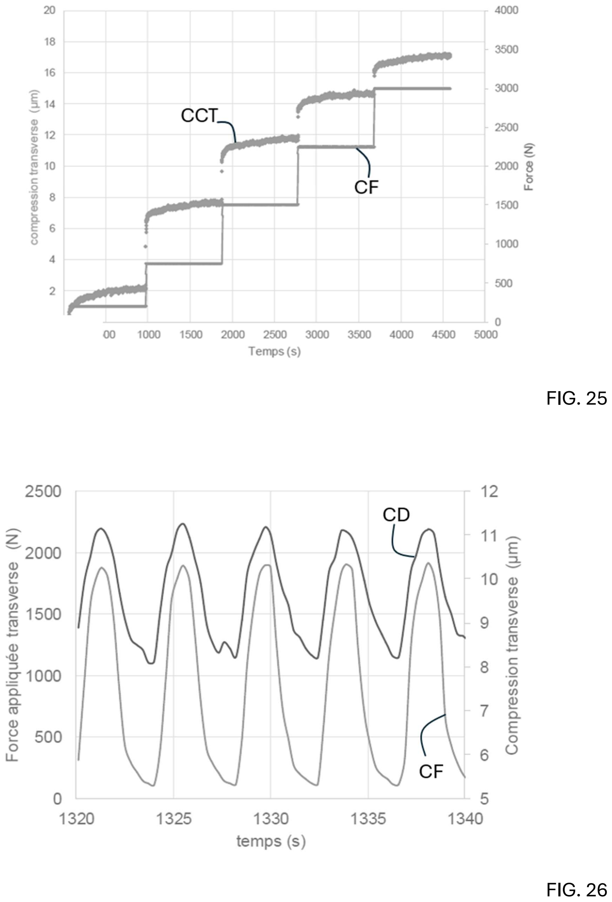

Les figures 24 et 25 représentent des courbes de la déformation de la cellule 2 en fonction de la force appliquée en newton. La figure 24 montre l'évolution de la tension de la cellule 2 en volt (courbe CT) en fonction de la force appliquée en newton (CF), pour une cellule 2 en phase de repos. Ainsi, au repos une augmentation de pression ne génère pas de variation de tension. L'effet observé pendant une décharge ne provient donc pas d'une variation de tension statique avec la pression appliquée. La figure 25 montre l'évolution de la compression transverse de la cellule 2 en micromètre (courbe CCT) en fonction de la force appliquée en newton (CF). Ainsi, une augmentation de pression génère une déformation transverse de la cellule 2.

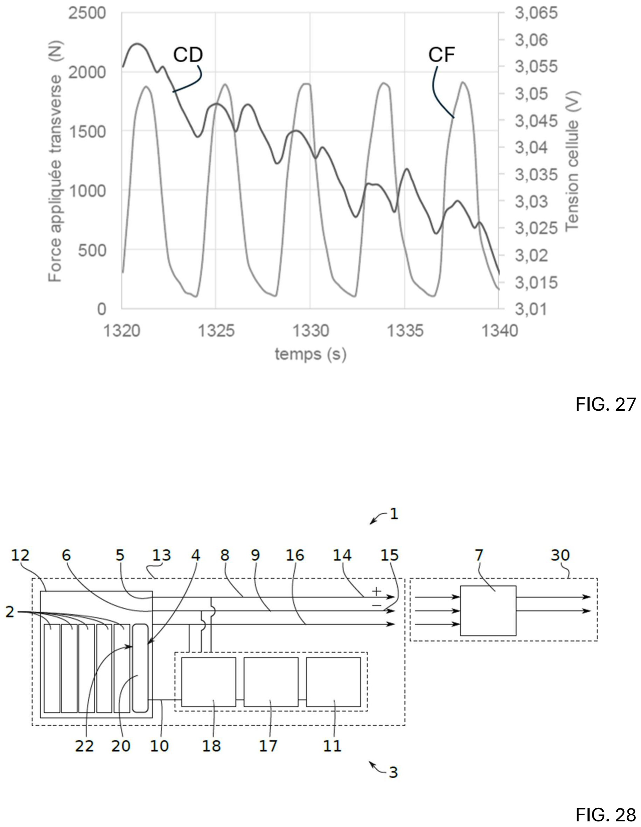

Les figures 26 et 27 illustrent des essais réalisés sur un banc de traction de 1800N. Pour une fréquence d'oscillation de 0.2 Hz et une décharge à un taux de 2C de la cellule 2, on observe que le déplacement suit les vagues d'oscillation de la force appliquée. Par ailleurs, on observe une double vague sur la tension correspondant à une augmentation de tension quand on applique la force de compression sur la cellule 2, puis un ressaut de tension lorsque la force est relâchée, correspondant à la phase de décompression de la cellule 2. Les courbes CD permettent de mesurer le déplacement, c'est-à-dire l'écrasement de la cellule 2 par compression. Cette mesure est directement liée à la compression de l'électrode à l'intérieur de la cellule 2. La figure 26 a pour ordonnée la compression transverse de la cellule 2 et la figure 27 a pour ordonnée la tension de la cellule 2 en volt. Pour ces essais, la déformation de l'électrode est d'environ 5 % par rapport à son épaisseur transverse initiale. Lors de ces essais, la déformation de l'électrode négative par compression peut typiquement être comprise entre 0.5 et 3 micromètres.

L'invention qui vient d'être décrite est adaptée à de nombreux domaines d'application, tels que, les véhicules automobiles terrestres, aériens, maritime, etc...

## Revendications

1. Procédé de gestion d'énergie, comprenant :
• une fourniture d'un module de stockage d'énergie (1), le module (1) comprenant au moins un accumulateur électrochimique (2), configuré pour stocker de l'énergie sous forme chimique, le module comprenant en outre des première (5) et deuxième (6) bornes électriques, dites de puissance, couplées électriquement audit au moins un accumulateur électrochimique (2),
• le procédé comprenant une application d'une pression sur ledit au moins un accumulateur électrochimique (2),
**caractérisé en ce que** la pression est appliquée de manière variable selon une fréquence strictement supérieure à 0.01 Hz et inférieure ou égale à 4 Hz, la pression étant appliquée lorsqu'un courant circule entre les première et deuxième bornes de puissance (5, 6).

2. Procédé selon la revendication précédente, dans lequel la pression est appliquée de manière variable selon une fréquence inférieure ou égale à 1 Hz.

3. Procédé selon l'une quelconque des revendications précédentes, dans lequel la pression est appliquée de manière variable de sorte que :
• la pression soit supérieure ou égale à une pression minimale supérieure ou égale à 0,1 bar, et/ou
• la pression soit inférieure ou égale à une pression maximale inférieure ou égale à 50 bars.

4. Procédé selon l'une quelconque des revendications précédentes, dans lequel la pression est appliquée de manière variable selon une variation d'amplitude de la pression :
• supérieure ou égale à 1 bar, et/ou
• inférieure ou égale à 10 bars.

5. Procédé selon l'une quelconque des revendications précédentes, dans lequel un courant circule entre les première et deuxième bornes de puissance (5, 6) pendant un intervalle de temps de référence, et la pression est appliquée de manière variable selon une période (Tpulse) strictement inférieure à l'intervalle de temps de référence, de préférence la pression est appliquée de manière variable selon un signal périodique.

6. Procédé selon l'une quelconque des revendications précédentes, dans lequel la pression est appliquée de manière variable de sorte que l'amplitude de la pression est constante.

7. Procédé selon l'une quelconque des revendications précédentes, dans lequel ledit au moins un accumulateur électrochimique (2) comprend un électrolyte au moins en partie liquide situé entre deux électrodes dudit au moins un accumulateur électrochimique (2).

8. Module de stockage d'énergie (1), comprenant :
• au moins un accumulateur électrochimique (2), configuré pour stocker de l'énergie sous forme chimique,
• un dispositif de compression (3) configuré pour appliquer une pression sur ledit au moins un accumulateur électrochimique (2),
• des première (5) et deuxième (6) bornes électriques, dites de puissance, couplées électriquement audit au moins un accumulateur électrochimique (2),
**caractérisé en ce que** le dispositif de compression (3) comprend un système (4) configuré pour faire varier la pression selon une fréquence strictement supérieure à 0.01 Hz et inférieure ou égale à 4 Hz, lorsqu'un courant circule entre les première et deuxième bornes de puissance (5, 6).

9. Module selon la revendication précédente, dans lequel le système (4) est configuré pour faire varier la pression selon une fréquence inférieure ou égale à 1 Hz.

10. Module selon l'une quelconque des deux revendications précédentes, dans lequel le système (4) est configuré pour faire varier la pression de sorte que :
• la pression soit supérieure ou égale à une pression minimale supérieure ou égale à 0,1 bar, et/ou
• la pression soit inférieure ou égale à une pression maximale inférieure ou égale à 50 bars.

11. Module selon l'une quelconque des trois revendications précédentes, dans lequel le système (4) est configuré pour faire varier la pression selon une variation d'amplitude de la pression :
• supérieure ou égale à 1 bar, et/ou
• inférieure ou égale à 10 bars.

12. Module selon l'une quelconque des quatre revendications précédentes, dans lequel un courant circule entre les première et deuxième bornes de puissance (5, 6) pendant un intervalle de temps de référence, et le système (4) est configuré pour faire varier la pression selon une période (Tpulse) strictement inférieure à l'intervalle de temps de référence, de préférence le système (4) est configuré pour faire varier la pression selon un signal périodique.

13. Module selon l'une quelconque des cinq revendications précédentes, dans lequel le système (4) est configuré pour faire varier la pression de sorte que l'amplitude de la pression est constante.

14. Module selon l'une quelconque des six revendications précédentes, dans lequel ledit au moins un accumulateur électrochimique (2) comprend un électrolyte au moins en partie liquide situé entre deux électrodes dudit au moins un accumulateur électrochimique (2).

15. Module selon l'une quelconque des sept revendications précédentes, dans lequel le système (4) comprend une surface destinée à être en contact avec l'accumulateur pour appliquer la pression variable.
